# EUROPÄISCHE PATENTANMELDUNG

(11) **EP 1 227 377 A2**
(43) Veröffentlichungstag der Anmeldung: **31.07.2002**
(21) Anmeldenummer: 02000994.0
(22) Anmeldetag: 17.01.2002
(51) Int. Cl.: G05B 9/02, G05B 23/02

(54) **Verfahren zum Schutz eines Stellantriebs vor Überlastung**

(30) Priorität: 20.01.2001 DE 10102520; 17.12.2001 EP 01129364; 16.01.2002 DE 10201598
(71) Anmelder: ZF Sachs AG, 97424 Schweinfurt (DE)
(72) Erfinder: John, Thomas, Dipl.-Ing., 97529 Sulzheim (DE); Kuhn, Thomas, Dipl.-Ing. (FH), 97688 Bad Kissingen (DE); Romanowski, Ralf, Dipl.-Ing., 97422 Schweinfurt (DE)

(57) **Zusammenfassung**

Es wird unter anderem beschrieben ein Verfahren zum Schutz eines Stellantriebs zum Stellen einer Vorrichtung, vorzugsweise einer Kupplung und/oder eines Getriebes oder zumindest einzelner Komponenten davon, vor Überlastung in Folge vorangegangener Schäden oder durch Mißbrauch, das durch folgende Schritte gekennzeichnet ist: Betriebsspezifische Werte des Stellantriebs oder einzelner Komponenten des Stellantriebs werden ermittelt oder erfaßt und an eine Rechnereinheit weitergeleitet. In der Rechnereinheit werden über einen definierten Zeitraum ermittelte oder erfaßte betriebsspezifische Werte überwacht und/oder verarbeitet. Beispielsweise kann die Einschaltdauer eines elektrischen Antriebs im Verhältnis der durchschnittlichen Einschaltzeit zur Ruhezeit des elektrischen Antriebs über den definierten Zeitraum berechnet werden. Wenn die betriebsspezifischen Werte innerhalb des definierten Zeitraums einen vorgegebenen Grenzwert erreichen oder übersteigen, werden über die Rechnereinheit geeignete Maßnahmen zum Schutz des Stellantriebs oder der einzelnen Komponenten vor Überlastung eingeleitet.

## Beschreibung

Die vorliegende Erfindung betrifft zunächst ein Verfahren zum Schutz eines Stellantriebs vor Überlastung gemäß dem Oberbegriff von Patentanspruch 1. Weiterhin betrifft die Erfindung eine Steuereinrichtung, eine Speichereinrichtung für Steuerprogramme sowie einen hydraulischen Stellantrieb gemäß dem Oberbegriff von Patentanspruch 21.

Hydraulische Stellantriebe sind bereits bekannt und werden unter anderem in Fahrzeugen zum Anstellen und Schalten von Kupplungen, Getrieben, insbesondere automatisierten Schaltgetrieben oder dergleichen, eingesetzt. Ein hydraulischer Stellantrieb der genannten Art ist beispielsweise in der von der Anmelderin ebenfalls eingereichten DE 196 47 940 A1 beschrieben.

Der in dieser Druckschrift beschriebene hydraulische Stellantrieb weist unter anderem einen Druckspeicher auf, der als Energiespeicher für periodisch benötigte Volumenspitzen, die vor allem während der Schalt- beziehungsweise Anstellvorgänge der mit dem hydraulischen Stellantrieb verbundenen Vorrichtung auftreten. Während solch einer Betätigung wird die im Druckspeicher befindliche Flüssigkeit, beispielsweise ein Hydrauliköl oder dergleichen, in einen Stellzylinder geleitet und von dort an die entsprechende Vorrichtung -beispielsweise in einen Nehmerzylinder- weitergeleitet, wo die Flüssigkeit dann den gewünschten Schalt- beziehungsweise Anstellvorgang bewirkt. Sinkt der Druck im Druckspeicher aufgrund Leckage und/oder ein- oder mehrmaliger Betätigung des Getriebes oder der Kupplung, wird eine Pumpe - beispielsweise eine Hydraulikpumpe - über deren Antrieb in Bewegung gesetzt, so daß erneut Flüssigkeit in den Druckspeicher gepumpt wird. Bei dem Antrieb handelt es sich üblicherweise um einen elektrischen Antrieb wie beispielsweise einen Elektromotor oder dergleichen.

Während des Betriebs wird die Pumpe häufig betätigt, was bedeutet, daß auch der elektrische Antrieb der Pumpe häufig ein- und ausgeschaltet wird. Aus diesem Grund handelt es sich bei dem elektrischen Antrieb um eine Komponente des hydraulischen Stellantriebs, die einer hohen Beanspruchung und damit hohem Verschleiß unterliegt und die daher relativ störanfällig ist. So ist es beispielsweise denkbar, daß der elektrische Antrieb durch auftretende Fehler im hydraulischen Stellantrieb oder durch Mißbrauch beschädigt oder zerstört wird, etwa durch Überlastung (beispielsweise Überhitzung) des Antriebs oder dergleichen. Ähnliche Probleme können auch bei anderen Komponenten des hydraulischen Stellantriebs auftreten, insbesondere bei solchen, die während des Betriebs häufig betätigt werden.

Aus der EP- A-0 999 630 A1 ist eine Vorrichtung und ein Verfahren bekannt, wie ein elektrischer Motor vor einer thermischen Überlastung geschützt werden kann. Dabei wird zunächst ein Meßsignal aufgenommen, das die dem Motor zugeführte elektrische Leistung widerspiegelt. In einer Rechnereinheit wird aus diesem Signal mittels eines thermischen Modells des Motors ein entsprechender Temperaturwert des Motors berechnet. Die auf diese Weise gewonnenen Temperaturwerte werden mit einem vorbestimmten Grenzwert verglichen. Im Falle, daß der Grenzwert überschritten wird, wird die Leistungszufuhr des Motors unterbrochen. Diese Zeitunterbrechung wird an die Rechnereinheit weitergeleitet, wo auf Grund der vorhandenen Daten entsprechende Temperaturwerte des elektrischen Antriebs simuliert werden. Damit kann das Abkühlverhalten des Motors während seiner Abschaltphase derart simuliert werden, daß im Zeitpunkt des Neustarts errechnete Temperaturwerte vorliegen, die den aktuellen thermischen Status des Motors widerspiegeln.

Der vorliegenden Erfindung liegt die Aufgabe zu Grunde, eine weitere Lösung für ein Verfahren zum Schutz eines Stellantriebs zum Stellen einer Vorrichtung vor Überlastung bereitzustellen, mit dem auf einfache und dennoch zuverlässige Weise eine Überlastung in Folge vorangegangener Schäden oder durch Mißbrauch verhindert werden kann. Weiterhin sollen eine entsprechende Steuereinrichtung, eine Speichereinrichtung sowie ein entsprechend verbesserter hydraulischer Stellantrieb bereitgestellt werden.

Die Aufgabe wird erfindungsgemäß gelöst durch das Verfahren gemäß Patentanspruch 1, die Steuereinrichtung gemäß Patentanspruch 19, die Speichereinrichtung für Steuerprogramme gemäß Patentanspruch 20 sowie den hydraulischen Stellantrieb gemäß Patentanspruch 21. Weitere Vorteile, Merkmale, Details und Effekte der vorliegenden Erfindung ergeben sich aus den Unteransprüchen, der Beschreibung sowie den Zeichnungen.

Merkmale und Details, die im Zusammenhang mit dem erfindungsgemäßen Verfahren beschrieben werden, gelten ebenso für die erfindungsgemäße Steuereinrichtung sowie den erfindungsgemäßen hydraulischen Stellantrieb und jeweils umgekehrt. Analoges gilt für die erfindungsgemäße Speichereinrichtung.

Gemäß dem ersten Aspekt der Erfindung wird ein Verfahren zum Schutz eines Stellantriebs zum Stellen einer Vorrichtung, vorzugsweise einer Kupplung und/oder eines Getriebes, oder zumindest einzelner Komponenten davon, vor Überlastung in Folge vorangegangener Schäden oder durch Mißbrauch bereitgestellt, das erfindungsgemäß durch folgende Schritte gekennzeichnet ist:
a) betriebsspezifische Werte des Stellantriebs oder einzelner Komponenten des Stellantriebs werden ermittelt oder erfaßt und an eine Rechnereinheit weitergeleitet;
b) in der Rechnereinheit werden über einen definierten Zeitraum ermittelte oder erfaßte betriebsspezifische Werte überwacht und/oder verarbeitet;
c) wenn die betriebsspezifischen Werte innerhalb des definierten Zeitraums einen vorgegebenen Grenzwert erreichen oder übersteigen, werden über die Rechnereinheit Maßnahmen zum Schutz des Stellantriebs oder der einzelnen Komponenten vor Überlastung eingeleitet.

Durch das erfindungsgemäße Verfahren wird es auf einfache und dennoch zuverlässige Weise möglich, einen Stellantrieb zum Stellen einer Vorrichtung beziehungsweise einzelne Komponenten dieses Stellantriebs vor Überlastung zu schützen. Im Vergleich zu der aus dem Stand der Technik bekannten Lösung, bei der betriebsspezifische Werte mittels eines Programms simuliert werden, werden bei dem erfindungsgemäßen Verfahren nunmehr betriebsspezifische Werte über einen definierten Zeitraum ermittelt oder erfaßt. Dadurch kann beim erfindungsgemäßen Verfahren auf die ansonsten erforderlichen relativ umfangreichen und komplizierten Simulations-Programmittel verzichtet werden.

Gemäß dem erfindungsgemäßen Verfahren werden zunächst betriebsspezifische Werte des Stellantriebs oder einzelner Komponenten des Stellantriebs ermittelt oder erfaßt und an eine Rechnereinheit weitergeleitet. Dabei ist die Erfindung nicht auf bestimmte betriebsspezifische Werte beschränkt. Vielmehr können all solche betriebsspezifischen Werte genutzt werden, aus denen sich eine mögliche Überlastung des Stellantriebs oder einzelner Komponenten des Stellantriebs ersehen oder ermitteln läßt. Dabei ist es erfindungsgemäß möglich, daß jeweils nur ein einziger betriebsspezifischer Wert oder aber mehrere betriebsspezifische Werte überwacht werden. Im weiteren Verlauf der Beschreibung werden einige nicht ausschließliche Beispiele für mögliche betriebsspezifische Werte, die erfindungsgemäß ermittelt oder erfaßt werden können, beschrieben. Selbstverständlich könnten auch andere betriebsspezifische Werte ermittelt oder erfaßt werden, so daß die Erfindung nicht auf die genannten Beispiele beschränkt ist. Die im weiteren Verlauf der Beschreibung genannten Beispielwerte können jeweils einzeln oder aber in beliebiger Kombination von der Rechnereinheit überwacht und/oder in dieser verarbeitet werden.

Die Ermittlung oder die Erfassung der betriebsspezifischen Werte kann auf verschiedene Weise erfolgen. Die jeweils geeignete Vorgehensweise hängt von dem zu überwachenden betriebsspezifischen Wert ab. So ist es beispielsweise denkbar, daß für manche Werte entsprechende Sensorelemente vorgesehen sind, die die Werte direkt oder indirekt messen und an die Rechnereinheit weiterleiten können. Andere betriebsspezifische Werte werden beispielsweise aus vorhandenen, gemessenen Werten ermittelt, etwa indem diese aus den entsprechenden gemessenen Werten errechnet oder abgeleitet werden. Auch hierbei handelt es sich um eine Ermittlung oder eine Erfassung von Werten gemäß der vorliegenden Erfindung.

In einem nächsten Schritt werden in der Rechnereinheit über einen definierten Zeitraum ermittelte oder erfaßte betriebsspezifische Werte überwacht und/oder verarbeitet. Das bedeutet, daß zunächst ein definierter Zeitraum festgelegt wird, und daß in diesem Zeitraum jeweils die betriebsspezifischen Werte des Stellantriebs in der Rechnereinheit überprüft werden. Sollten die betriebsspezifischen Werte innerhalb des definierten Zeitraums einen vorgegebenen Grenzwert erreichen oder übersteigen, werden über die Rechnereinheit Maßnahmen zum Schutz des Stellantriebs oder der einzelnen Komponenten vor Überlastung eingeleitet. Einige nicht ausschließliche Beispiele für geeignete Schutzmaßnahmen werden im weiteren Verlauf der Beschreibung näher erläutert.

Vorteilhaft können die ermittelten oder erfaßten betriebsspezifischen Werte des Stellantriebs innerhalb der Rechnereinheit mit wenigstens einem entsprechenden Referenzwert, der den Grenzwert bildet, verglichen werden. Der Referenzwert kann beispielsweise in Form eines diskreten Werts, in Form einer Kennlinie oder dergleichen vorliegen.

Vorzugsweise können über die Rechnereinheit Maßnahmen zum Schutz des Stellantriebs oder der einzelnen Komponenten vor Überlastung eingeleitet werden, wenn die betriebsspezifischen Werte den vorgegebenen Grenzwert für eine bestimmte Zeitdauer innerhalb des definierten Zeitraums erreichen oder übersteigen. Diese Zeitdauer kann je nach Anwendungsfall des Verfahrens beliebig ausgestaltet sein. Vorzugsweise beträgt die Zeitdauer einen bestimmten Prozentsatz des definierten Zeitraums. Im Extremfall kann die Zeitdauer dem gesamten Zeitraum entsprechen.

Die erfindungsgemäße Überwachung der betriebsspezifischen Werte innerhalb eines definierten Zeitraums hat auch den Vorteil, daß ein kurzzeitiges, beispielsweise einmaliges Überschreiten des Grenzwerts nicht unbedingt Schutzmaßnahmen auslösen muß. Dadurch wird die Betriebsbereitschaft des Stellantriebs oder seiner Komponenten nicht reduziert. Erst wenn in einem solchen Fall die Überschreitung des Grenzwerts über eine längere Spanne (Zeitdauer) oder den gesamten Zeitraum erfolgt, kann mit Sicherheit von einem Mißbrauch oder einem Fehler ausgegangen werden, was geeignete Schutzmaßnahmen zur Folge hat.

Vorteilhaft können die betriebsspezifischen Werte und/oder die Grenzwerte zumindest zeitweilig in einer Speichereinrichtung abgelegt werden oder sein, wobei die Rechnereinheit Zugriff auf die Speichereinrichtung nimmt oder nehmen kann. Bei der Speichereinrichtung kann es sich je nach Bedarf und Anwendungsfall um einen permanenten Speicher, einen flüchtigen Speicher oder dergleichen handeln. Auf diese Weise können die zulässigen Grenzwerte zunächst separat, beispielsweise durch entsprechende Tests oder dergleichen ermittelt und anschließend in der Speichereinheit abgelegt und damit der Rechnereinheit zur Verfügung gestellt werden. Auch ist es möglich, die Grenzwerte im Nachhinein noch zu ändern beziehungsweise Grenzwerte anderer betriebsspezifischer Werte hinzuzufügen. Die zumindest zeitweilige Speicherung der ermittelten oder erfaßten betriebsspezifischen Werte in der Speichereinrichtung hat weiterhin Vorteile bei der Wartung und Instandhaltung wie im Hinblick auf den erfindungsgemäßen hydraulischen Stellantrieb weiter unten noch näher erläutert wird.

Vorteilhaft können die betriebsspezifischen Werte über Programmittel in der Rechnereinheit überwacht und/oder verarbeitet werden. Bei dem Programmitteln kann es sich um geeignete Computerprogramme beziehungsweise Software handeln.

Vorteilhaft kann der definierte Zeitraum eine Minute betragen. Selbstverständlich ist die Erfindung nicht auf die Länge dieses speziellen Zeitraums beschränkt.

Vorteilhaft kann als betriebsspezifischer Wert die Einschaltdauer eines dem Stellantrieb zugeordneten elektrischen Antriebs ermittelt werden. In der Rechnereinheit kann dabei die Einschaltdauer des elektrischen Antriebs aus dem Verhältnis der durchschnittlichen Einschaltzeit zur Ruhezeit des elektrischen Antriebs über den definierten Zeitraum berechnet werden, wobei bei Erreichen eines Grenzwerts für die Einschaltdauer Maßnahmen zum Schutz des elektrischen Antriebs vor Überlastung eingeleitet werden.

Auf diese Weise wird beispielsweise eine Möglichkeit zum Schutz eines wie in der DE 196 47 940 A1 beschriebenen Elektromotors für eine Pumpe in einem hydraulischen Stellantrieb vor Überlastung in Folge vorangegangener Schäden im hydraulischen Stellantrieb oder durch Mißbrauch geschaffen. Vorteilhaft kann dabei die Einschaltdauer des Elektromotors aus dem Verhältnis der durchschnittlichen Einschaltzeit zur Ruhezeit des Elektromotors der letzten vergangenen Minute berechnet werden.

In weiterer Ausgestaltung kann die Temperatur des Stellantriebs oder einzelner Komponenten des Stellantriebs gemessen werden, wobei die gemessenen Temperaturwerte ebenfalls an die Rechnereinheit weitergeleitet werden.

Vorteilhaft können die gemessenen Temperaturwerte in der Rechnereinheit mit einer Temperaturkennlinie verglichen werden, wobei der vorgegebene Grenzwert einen diskreten Punkt auf der Kennlinie oder einen Bereich der Temperaturkennlinie darstellt.

Dies soll anhand eines nicht ausschließlichen Beispiels erläutert werden. Beispielsweise kann vorgesehen sein, daß ein Stellantrieb für eine bestimmte Temperatur ausgelegt ist. Um ein Zahlenbeispiel zu nennen, der Stellantrieb könnte etwa für eine in unmittelbarer Nähe des Stellantriebs herrschende Temperatur von 80°C ausgelegt sein. Nun können jedoch Situationen auftreten, in denen diese Temperaturen überschritten werden. Wenn nun aktuelle erfaßte oder gemessene Temperaturwerte mit einer Temperaturkennlinie verglichen werden, könnte diese beispielsweise einen besonders ausgebildeten Bereich aufweisen, der den Grenzwert markiert. Beispielsweise könnte die Temperaturkennlinie in dem den Grenzwert bildenden Bereich abknicken. Zurückkommend auf das Zahlenbeispiel könnte die Temperaturkennlinie beispielsweise im Bereich von 90°C bis 100°C abknicken. Sobald dieser Bereich erreicht ist, kann in der Rechnereinheit ein Mißbrauch oder Fehler erkannt werden, woraufhin geeignete Schutzmaßnahmen eingeleitet werden können. Ebenso ist es denkbar, daß der Grenzwert einen diskreten Punkt auf der Temperaturkennlinie darstellt. Wenn dieser Grenzwert, der für das Zahlenbeispiel beispielsweise bei 100°C liegen könnte, erreicht oder überschritten wird, wird dann ein entsprechender Fehler oder Mißbrauch erkannt und eine geeignete Schutzmaßnahme eingeleitet. Beispielsweise kann eine entsprechende Fehlermeldung abgesetzt werden, daß sich die Temperatur in einem ungültigen Arbeitsbereich befindet. Wenn der Stellantrieb beispielsweise in einem Fahrzeug eingesetzt wird, kann ein solcher Fehler auftreten, wenn die Motorkühlung fehlerhaft arbeitet.

Wenn die Temperatur gemessen wird, kann beispielsweise auch die Einschaltdauer einer Komponente des Stellantriebs im Verhältnis zu den Temperaturwerten überwacht werden.

In der Rechnereinheit kann beispielsweise aus der Einschaltdauer im Verhältnis zur Temperatur die Temperatur des elektrischen Antriebs berechnet werden.

Wenn es sich bei dem elektrischen Antrieb beispielsweise um einen Elektromotor handelt, können durch die Betrachtung der Einschaltdauer des Elektromotors in Abhängigkeit zur Temperatur Rückschlüsse auf die Kohlentemperatur des Elektromotors gezogen werden. Auf diese Weise kann eine drohende Überlastung des Elektromotors rechtzeitig erkannt werden, so daß in der Folge geeignete Schutzmaßnahmen eingeleitet werden können.

Eine mögliche Maßnahme zum Schutz des elektrischen Antriebs ist beispielsweise eine Reduzierung der Einschaltdauer des elektrischen Antriebs und/oder der Temperatur des Stellantriebs oder einzelner Komponenten des Stellantriebs, die beim Überschreiten der maximalen Grenzwerte vorgenommen beziehungsweise über die Rechnereinheit eingeleitet wird/werden.

In weiterer Ausgestaltung kann als Maßnahme zum Schutz des elektrischen Antriebs die Einschaltdauer auf einen Maximalwert begrenzt werden.

Falls die Einbaulage des Stellantriebs temperaturunkritisch ist, wäre es auch denkbar, lediglich die maximale Einschaltzeit, unabhängig von der Temperatur, etwa der Temperatur des Stellantriebs, der Umgebungstemperatur oder dergleichen, zum Schutz des elektrischen Antriebs festzulegen.

Als weitere Maßnahme zum Schutz des elektrischen Antriebs kann beispielsweise eine konstante Einschaltdaüer geschaltet werden.

In weiterer Ausgestaltung kann als betriebsspezifischer Wert die durchschnittliche Anzahl der Stellvorgänge der Vorrichtung durch den Stellantrieb über den definierten Zeitraum erfaßt und an die Rechnereinheit weitergeleitet werden.

Dies soll an Hand eines konkreten, nicht ausschließlichen Beispiels erläutert werden, bei dem der Stellantrieb zum Stellen beziehungsweise Schalten eines Getriebes eingesetzt wird. Um in einem solchen Fall einen Mißbrauch des hydraulischen Stellantriebs nicht fälschlicherweise als Fehler einzustufen, kann die durchschnittliche Anzahl an Schaltungen, beziehungsweise an Gangwechseln, über den definierten Zeitraum, beispielsweise der letzten Minute, erfaßt werden. Wird hierbei ein Grenzwert überschritten, so kann der Nutzer des Stellantriebs, beispielsweise der Fahrer eines Kraftfahrzeugs, auf geeignete Weise gewarnt werden (beispielsweise durch eine entsprechende Warnlampe). Darüber hinaus können entsprechende Schutzmaßnahmen eingeleitet werden. Zusätzlich zu den weiter oben beschriebenen Maßnahmen wäre bei einem Fahrzeug als weitere Maßnahme beispielsweise vorstellbar, das Fahrzeug zeitweise nur noch in einem Automatprogramm fahren/schalten zu lassen, mit dem Ziel einer zwangsweise Reduzierung der Schaltungen.

In weiterer Ausgestaltung kann der Stellantrieb als hydraulischer Stellantrieb ausgebildet sein, wobei ein solcher Stellantrieb üblicherweise eine Pumpe aufweist. In einem solchen Fall kann als betriebsspezifischer Wert die durchschnittliche Einschalthäufigkeit der Pumpe über den definierten Zeitraum erfaßt und an die Rechnereinheit weitergeleitet werden. Über die Ermittlung der Einschalthäufigkeit der Pumpe kann ein Verschleiß, beziehungsweise ein Defekt eines mit der Pumpe verbundenen Druckspeichers, wie er in der Beschreibungseinleitung bereits erläutert worden ist, frühzeitig erkannt werden.

Vorteilhaft kann in einem Fall, in dem der Stellantrieb als hydraulischer Stellantrieb ausgebildet ist, als betriebsspezifischer Wert auch der Druckanstieg innerhalb des Stellantriebs oder einzelner Komponenten des Stellantriebs erfaßt und an die Rechnereinheit weitergeleitet werden. Wird beispielsweise bei einem eingeschalteten elektrischen Antrieb oder bei einer hohen Einschaltdauer kein signifikanter Druckanstieg festgestellt, beziehungsweise ein oberer Abschaltpunkt nicht erreicht, kann von einem Fehler im Stellantrieb beziehungsweise von einer Überlastung des Stellantriebs ausgegangen werden, so daß über die Rechnereinheit eine Abschaltung des Stellantriebs eingeleitet werden kann.

Vorzugsweise kann der Stellantrieb als hydraulischer Stellantrieb ausgebildet sein, wobei der als betriebsspezifischer Wert der herrschende Druck innerhalb des Stellantriebs oder einzelner Komponenten des Stellantriebs erfaßt und an die Rechnereinheit weitergeleitet werden kann. In einem solchen Fall können dann über die Rechnereinheit Maßnahmen zum Schutz des Stellantriebs oder der einzelnen Komponenten vor Überlastung eingeleitet werden, wenn die erfaßten Druckwerte eine bestimmte Druckschwelle unterschreiten.

Wenn der hydraulische Stellantrieb beispielsweise zum Stellen eines Getriebes und/oder einer Kupplung eingesetzt wird, kann die Unterschreitung einer Druckschwelle beispielsweise durch gezielte, wenige Hochlast-Pendelschaltungen hervorgerufen werden.

Als Maßnahme zum Schutz des hydraulischen Stellantriebs vor Überlastung kann beispielsweise ein Stellvorgang des hydraulischen Stellantriebs verhindert oder verzögert werden.

Gemäß einem zweiten Aspekt der Erfindung wird eine Steuereinrichtung zum Schutz eines Stellantriebs zum Stellen einer Vorrichtung, vorzugsweise einer Kupplung und/oder eines Getriebes oder zumindest einzelnen Komponenten davon bereitgestellt, die ein oder mehrere Sensorelemente zum Erfassen betriebsspezifischer Werte des Stellantriebs oder einzelner Komponenten des Stellantriebs sowie eine Rechnereinheit zum Überwachen und/oder Verarbeiten der ermittelten oder erfaßten betriebsspezifischen Werte aufweist. Dabei weist die Rechnereinheit vorteilhaft Programmittel zur Durchführung des wie vorstehend beschriebenen Erfindungen Verfahrens auf.

Die Programmittel können zum Beispiel in Form von Computerprogrammen, beziehungsweise Software, vorliegen, durch die der Stellantrieb beziehungsweise die einzelnen Komponenten des Stellantriebs vor Überlastung in Folge vorangegangener Schäden oder durch Mißbrauch geschützt werden. Dadurch wird auf einfache Weise das erfindungsgemäße Verfahren durchgeführt, dessen besondere Vorteile oben bereits ausführlich beschrieben wurden.

Als Sensorelemente werden im Rahmen der vorliegenden Erfindung all solche Bauelemente verstanden, mit denen betriebsspezifische Werte direkt oder indirekt ermittelt, erfaßt, errechnet oder abgeleitet werden können.

Gemäß einem anderen Aspekt der Erfindung wird eine Speichereinrichtung für Steuerprogramme zur Verfügung gestellt, die Programmittel zur Durchführung des erfindungsgemäßen Verfahrens umfaßt. Als Speichereinrichtung können zum Beispiel herkömmliche Speichermedien vorgesehen sein, die jedoch durch die Programmittel, beziehungsweise durch die Software, eine besondere Funktionalität verkörpern, durch die sie sich von den bekannten Speichermedien in der besonderen Weise der vorliegenden Erfindung unterscheiden.

Gemäß einem weiteren Aspekt der Erfindung wird ein hydraulischer Stellantrieb für eine Vorrichtung, vorzugsweise eine Kupplung und/oder ein Getriebe bereitgestellt, mit einer Steuereinrichtung, die eine Rechnereinheit aufweist oder mit einer Rechnereinheit verbunden ist und einer mittels eines Antriebs antreibbaren Pumpe, durch die beispielsweise ein Druckspeicher gespeist wird. Der hydraulische Stellantrieb ist erfindungsgemäß gekennzeichnet durch Mittel zur Durchführung des wie vorstehend beschriebenen erfindungsgemäßen Verfahrens.

Der hydraulische Stellantrieb kann vorteilhaft eine wie vorstehend beschriebene erfindungsgemäße Steuereinrichtung aufweisen. Weiterhin kann der hydraulische Stellantrieb auch Programmittel umfassen, wie sie oben kurz beschrieben worden sind.

Vorteilhaft kann eine Speichereinrichtung und/oder eine Anzeigeneinrichtung vorgesehen sein, die mit der Steuereinrichtung, insbesondere der Rechnereinheit, verbunden ist beziehungsweise kommuniziert oder kommunizieren kann. Wenn einzelne Grenzwerte erreicht oder überschritten werden, kann dies zur Warnung in der Speichereinrichtung gespeichert und/oder in der Anzeigeeinrichtung angezeigt werden. Bei kleineren oder nur kurzzeitigen Abweichungen, die nicht direkt behoben werden müssen, reicht es beispielsweise aus, wenn diese Informationen in der Speichereinrichtung abgespeichert werden. Ebenso kann es vorteilhaft sein, durch eine entsprechende Speicherung den Entwicklungsgang der betriebsspezifischen Werte im nachhinein nachvollziehen zu können. Bei der nächsten Wartung des Stellantriebs kann diese Speichereinrichtung ausgelesen und eine Überprüfung der gespeicherten Daten vorgenommen werden. Wenn ein größerer Fehler im hydraulischen Stellantrieb auftritt, beispielsweise wenn die Grenzwerte der betriebsspezifischen Werte weit oder über einen längeren Zeitraum überschritten werden, kann dies über die Anzeigeeinrichtung, etwa eine Lampe, ein Display oder dergleichen, angezeigt werden, so daß sofort geeignete Maßnahmen ergriffen werden können.

Vorteilhaft kann der Antrieb der Pumpe als elektrischer Motor ausgebildet sein.

Die in den verschiedenen Kategorien verkörperte und vorstehend beschriebene Erfindung kann besonders bevorzugt im Zusammenhang mit einer Kupplung und/oder einem Getriebe, etwa einem automatisierten Schaltgetriebe, für ein Fahrzeug verwendet werden. In einem solchen Fall handelt es sich bei dem Stellantrieb vorteilhaft um einen hydraulischen Stellantrieb. Ein solcher hydraulischer Stellantrieb ist beispielsweise in der DE 196 47 940 A1 beschrieben, deren Offenbarungsgehalt insoweit in die Beschreibung der vorliegenden Erfindung miteinbezogen wird.

Die Erfindung wird nun an Hand von Ausführungsbeispielen unter Bezugnahme auf die beiliegende Zeichnung näher erläutert. Es zeigen:
Figur 1 in schematischer Ansicht einen erfindungsgemäßen hydraulischen Stellantrieb;
Figur 2 ein Diagramm, in dem die Einschaltdauer eines elektrischen Antriebs über der Temperatur des hydraulischen Stellantriebs aufgetragen ist.

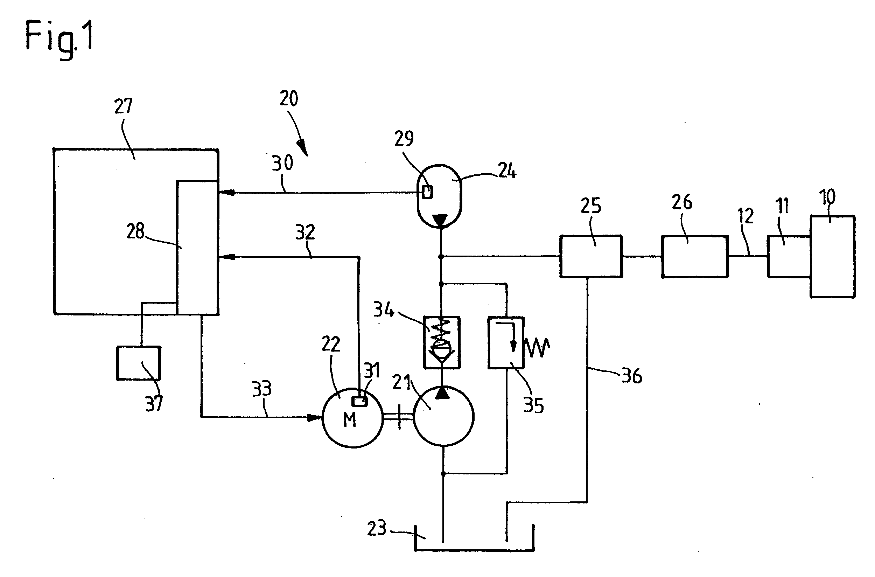

In Figur 1 ist ein hydraulischer Stellantrieb 20 dargestellt, der zur Schaltung eines automatisierten Schaltgetriebes 10 mit diesem verbunden ist. Dazu weist der Stellantrieb 20 einen Stellzylinder 26 auf, der über eine Hydraulikleitung 12 mit einem Nehmerzylinder 11 des Getriebes 10 verbunden ist.

Der hydraulische Stellantrieb 20 wird über eine Steuereinrichtung 27 gesteuert. Die Steuereinrichtung 27 spricht dabei auf ein die momentane Stellung des Stellzylinders 26 repräsentierendes Signal an und steuert über ein Steuerventil 25, das im vorliegenden Fall als Drei-Wege-Proportionalventil ausgebildet ist, volumenproportional zur gewünschten Stellung des Nehmerzylinders 11 den Druck im Stellzylinder 26.

Bei Öffnung des Steuerventils 25 wird der Stellzylinder 26 mit einem Druckspeicher 24 verbunden. Der Druckspeicher 24 ist über ein in Druckrichtung einer Hydraulikpumpe 21 öffnendes Rückschlagventil 34 mit der die Hydraulikflüssigkeit aus einem Vorratsbehälter 23 befördernden, von einem Elektromotor 22 angetriebenen Hydraulikpumpe 21 verbunden.

Während des Betriebs des hydraulischen Stellantriebs 20 wird Hydraulikflüssigkeit über die Pumpe 21 aus dem Vorratsbehälter 23 herausgepumpt und in den Druckspeicher 24 hineingepumpt. Bei Auftreten eines Stellsignals, beispielsweise erzeugt durch die Steuereinrichtung 27, wird die Hydraulikflüssigkeit in den Stellzylinder 26 hineingeleitet, wo sie eine entsprechende Stellung des Nehmerzylinders 12 und damit des Getriebes 10 bewirkt. Nach Abschluß des Stellvorgangs wird die Hydraulikflüssigkeit bei entsprechender Stellung des Steuerventils 25 über eine Rückführleitung 36 zurück in den Vorratsbehälter 23 geleitet.

Ein mit der Ausgangsseite der Hydraulikpumpe 21 verbundenes, zum Vorratsbehälter 23 zurückführendes Druckbegrenzungsventil 35 schützt den hydraulischen Stellantrieb 20 vor Drucküberlastung.

In der Steuereinrichtung 27 ist weiterhin eine Rechnereinheit 28 integriert. Genauso ist es jedoch auch denkbar, daß die Rechnereinheit 28 als separates Bauteil vorliegt, das dann mit der Steuereinrichtung 27 kommuniziert. Die Rechnereinheit 28 ist schließlich mit einer Anzeige-/Speichereinrichtung 37 verbunden.

Die Rechnereinheit 28 steht über verschiedene Signalleitungen mit einer Reihe von Sensorelementen in Verbindung. Im vorliegenden Ausführungsbeispiel ist zunächst ein Sensorelement 31 vorgesehen, welches dem elektrischen Antrieb 22 zugeordnet ist, und über das dessen Einschaltdauer 22 bestimmt werden kann. Dazu kann das Sensorelement 31 beispielsweise in einer Weise ausgebildet sein, daß es erfaßt, ob der elektrische Antrieb 22 ein- oder ausgeschaltet ist. Um die auf diese Weise ermittelten betriebsspezifischen Werte an die Rechnereinheit 28 weiterleiten zu können, ist das Sensorelement 31 über die Signalleitung 32 mit diesem verbunden. In der Rechnereinheit 28 kann aus den vom Sensorelement 31 ermittelten oder erfaßten Werten die Einschaltdauer des elektrischen Antriebs 22 berechnet werden.

Weiterhin ist im hydraulischen Stellantrieb 20 ein Sensorelement zur Bestimmung der Temperatur vorgesehen. Im vorliegenden Ausführungsbeispiel befindet sich das Sensorelement 29 zur Bestimmung der Temperatur innerhalb des Druckspeichers 24. Es kann jedoch auch an anderen Orten innerhalb des hydraulischen Stellantriebs 20 plaziert sein. Zur Übermittlung der vom Sensorelement 29 erfaßten Temperaturwerte an die Rechnereinheit 28 ist dieses über die Signalleitung 30 mit dieser verbunden. Die Rechnereinheit 28 ist schließlich noch über eine Signalleitung 33 mit dem elektrischen Antrieb 22 verbunden.

Wird während eines vorbestimmten Zeitintervalls, beispielsweise durch häufige Änderungen von Betriebsbedingungen, eine mehrmalige Betätigung des Stellzylinders 26 erforderlich, kann ein Abfließen von Hydrauliköl aus dem Druckspeicher 24 ein häufiges Betätigen des elektrischen Antriebs 22 auslösen, um mittels der Pumpe 21 Hydrauliköl nachzufördern. Dadurch kann der elektrische Antrieb überlastet werden. Eine solche Überlastung kann durch das erfindungsgemäße Verfahren wirkungsvoll verhindert werden, wie nachfolgend an Hand eines Überlastungsschutzes für den elektrischen Antrieb 22 im Detail beschrieben wird. Selbstverständlich läßt sich das erfindungsgemäße Verfahren auch auf andere Komponenten des hydraulischen Stellantriebs 20, beispielsweise die Pumpe 21, den Stellzylinder 26 oder dergleichen, anwenden. Auch ist das Verfahren für das Schaltgetriebe 10, dessen Nehmerzylinder 11 oder dergleichen einsetzbar.

Um den elektrischen Antrieb 22 vor Überlastung schützen zu können, werden zunächst betriebsspezifische Werte des elektrischen Antriebs 22 ermittelt und an die Rechnereinheit 28 weitergeleitet. Im vorliegenden Beispiel wird über das Sensorelement 31 festgestellt, ob und wann der elektrische Antrieb 22 ein- beziehungsweise ausgeschaltet wird. Die auf diese Weise ermittelten Werte werden über die Signalleitung 32 an die Rechnereinheit 28 weitergeleitet. In der Rechnereinheit werden die über einen definierten Zeitraum ermittelten oder erfaßten betriebsspezifischen Werte überwacht und/oder verarbeitet. Im vorliegenden Fall wird in der Rechnereinheit 28 die Einschaltdauer des elektrischen Antriebs 22 aus dem Verhältnis der durchschnittlichen Einschaltzeit zur Ruhezeit des elektrischen Antriebs 22 über den definierten Zeitraum, der im vorliegenden Fall die letzte vergangene Minute bildet, berechnet. Die auf diese Weise berechneten Werte werden zumindest zeitweilig in der Speichereinrichtung 37 abgespeichert. In der Speichereinrichtung 37 sind weiterhin Grenzwerte für die Einschaltdauer abgespeichert. Die Rechnereinheit 28 nimmt nun Zugriff auf die Speichereinrichtung 37 und vergleicht die berechneten Werte für die Einschaltdauer mit den in der Speichereinrichtung 37 abgelegten Grenzwerten. Werden diese Grenzwerte erreicht und/oder überschritten, werden Maßnahmen zum Schutz des elektrischen Antriebs 22 vor Überlastung eingeleitet. Die Einleitung dieser Maßnahmen erfolgt über die Rechnereinheit 28, die über die Signalleitung 33 entsprechende Signale und Anweisungen an den elektrischen Antrieb 22 leitet. So ist es beispielsweise denkbar, daß die Einschaltdauer des elektrischen Antriebs auf einen Maximalwert begrenzt oder für den elektrischen Antrieb eine konstante Einschaltdauer geschaltet wird.

Die Einleitung der Schutzmaßnahmen und/oder die Art der eingeleiteten Schutzmaßnahmen kann über eine geeignete Anzeigeeinrichtung (nicht dargestellt) angezeigt werden. Hierbei kann es sich beispielsweise um eine Warnlampe handeln, die je nach Art der auftretenden Schäden oder des Mißbrauchs blinkt oder konstant leuchtet. Ebenso ist es denkbar, daß die Anzeigeeinrichtung in Form eines Displays vorliegt, das beispielsweise Bestandteil eines Bordcomputers ist. Natürlich sind auch andere Ausgestaltungsvarianten denkbar.

Weiterhin wird im Ausführungsbeispiel gemäß Figur 1 noch die Temperatur des hydraulischen Stellantriebs 20 gemessen. Auch diese als betriebsspezifische Werte fungierenden Temperaturwerte werden an die Rechnereinheit 28 weitergeleitet. An Hand der gemessenen Temperaturwerte und der Einschaltdauer des elektrischen Antriebs läßt sich über die Rechnereinheit 28 die Temperatur des elektrischen Antriebs, beispielsweise dessen Kohlentemperatur, berechnen und somit eine drohende Überlastung rechtzeitig erkennen. Auf diese Weise können frühzeitig geeignete Schutzmaßnahmen eingeleitet werden.

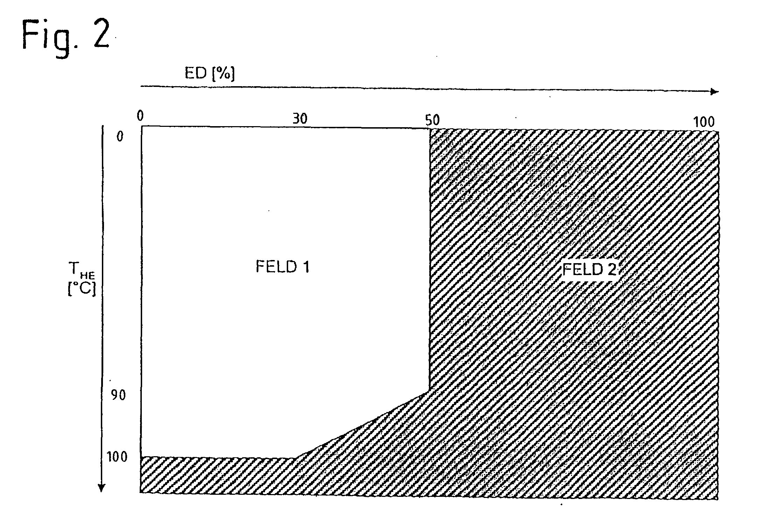

In Figur 2 ist ein Diagramm dargestellt, in dem die ermittelte Einschaltdauer ED des elektrischen Antriebs 22 über der Temperatur T_{HE} des hydraulischen Stellantriebs 20 aufgetragen ist. Wenn sich die jeweils ermittelten beziehungsweise berechneten Werte in Feld 1 befinden, liegt ein normaler Betrieb vor, so daß keine Schutzmaßnahmen ergriffen werden müssen. Befinden sich die ermittelten beziehungsweise errechneten Werte jedoch in Feld 2, so liegt ein Fehler, beziehungsweise ein Mißbrauch, des hydraulischen Stellantriebs 20 vor. In diesem Fall müssen geeignete Schutzmaßnahmen ergriffen werden. Dies soll an Hand eines Zahlenbeispiels erläutert werden.

Zunächst soll angenommen werden, daß es sich um einen Mißbrauch des hydraulischen Stellantriebs 20 handelt. Ein solcher Mißbrauch kann beispielsweise ermittelt werden, indem ebenfalls die Schalthäufigkeit des Schaltgetriebes 10 gemessen wird. Diese Meßwerte können dann als weitere betriebsspezifische Werte an die Rechnereinheit 28 weitergeleitet werden. Übersteigt die Schalthäufigkeit des Schaltgetriebes 10 innerhalb des definierten Zeitraums einen vorgegebenen Grenzwert, wird von einem Mißbrauch des Systems ausgegangen. Ein solcher Mißbrauch liegt beispielsweise vor, wenn in einem Zeitraum von 30 Sekunden eine Schalthäufigkeit von > 20 ermittelt wird. In einem solchen Fall kann der Fahrer auf geeignete Weise, beispielsweise durch eine blinkende Warnlampe, gewarnt werden. Stellt der Fahrer den Mißbrauch nicht ab, wird die Einschaltdauer des elektrischen Antriebs 22 über die Rechnereinheit 28 beispielsweise auf 30% begrenzt. Weiterhin kann vorgesehen sein, daß das Fahrzeug, beziehungsweise das Schalten des Getriebes über einen Automatmodus gesteuert wird. Während dieser Zeit wird der Fahrzeugführer vorzugsweise über eine geeignete Anzeigeeinrichtung gewarnt, beispielsweise indem die zuvor beschriebene Warnlampe nicht mehr blinkt, sondern permanent leuchtet.

Wenn im hydraulischen Stellantrieb 20 kein Mißbrauch vorliegt, sondern ein permanenter Fehler auftritt, wird dies beispielsweise dadurch erkannt, daß die Schalthäufigkeit des Schaltgetriebes 10 unterhalb des vorgesehenen Grenzwerts bleibt. In diesem Fall wird der hydraulische Stellantrieb 20 in einen Modus für Notbetrieb umgeschaltet, beispielsweise indem die Einschaltdauer des elektrischen Antriebs 22 auf 30% reduziert wird. Gleichzeitig kann die zuvor beschriebene Warnlampe permanent leuchten, so daß der Fahrzeugführer auf den bestehenden Fehler aufmerksam gemacht wird.

In beiden vorbeschriebenen Fällen kann bei einem weiterhin auftretenden Druckabfall innerhalb des Stellantriebs 20 der Gang automatisch ausgelegt werden.

Ein zu geringer Füllstand an Hydraulikflüssigkeit im hydraulischen Stellantrieb 20 kann in der Regel nicht zu einer Schädigung des Stellantriebs 20 führen, da dies nur im Falle einer zu hohen Einschaltdauer oder einer Überschreitung der Soll/Ist-Abweichung der im Stellantrieb 20 befindlichen Komponenten kritisch wäre. Ein dauerhaft eingeschalteter Antrieb 22 wird bei einem definierten Zeitraum von einer Minute und einem vorgegebenen Grenzwert für die Einschaltdauer von 50% beispielsweise spätestens nach 30 Sekunden erkannt. Im folgenden bleibt der elektrische Antrieb 22 durch eine Begrenzung der Einschaltdauer auf 30% für ca. 20 Sekunden ausgeschaltet. Wenn beim nächsten Einschalten, das heißt für die Restdauer von 10 Sekunden, kein Druckanstieg zu vernehmen ist, dann liegt entweder ein Fehler des Drucksensors oder eine Leckage im hydraulischen Stellantrieb vor, was ein Abschalten des elektrischen Antriebs 22 zur Folge hätte. Beim nächsten Schaltwunsch des Getriebes 10 wird dann der hydraulische Stellantrieb 20 wieder zugeschaltet. Folgt der Ist-Wert dem Soll-Wert (bei der Kupplung oder beim Getriebe), so liegt ein Drucksensor-Fehler vor und es wird auf eine konstante Einschaltdauer von 30% geschaltet. Ist dies nicht der Fall, so wird auf Leckage erkannt und der elektrische Antrieb 22 unverzüglich abgeschaltet. Außerdem wird versucht, den Gang auszulegen.

Durch die vorliegende Erfindung kann auf einfache und dennoch zuverlässige Weise ein Schutz des hydraulischen Stellantriebs oder einzelner Komponenten des hydraulischen Stellantriebs vor Überlastung in Folge vorangegangener Schäden oder durch Mißbrauch realisiert werden. Dabei ist zudem kein oder allenfalls nur ein geringer Aufwand erforderlich, um das Verfahren durchführen zu können. Hierdurch können insbesondere auch Kosten eingespart werden.

### Bezugszeichenliste

- 10 =: Vorrichtung (Kupplung/Getriebe)
- 11 =: Nehmerzylinder
- 12 =: Hydraulikleitung

- 20 =: hydraulischer Stellantrieb
- 21 =: Pumpe
- 22 =: elektrischer Antrieb
- 23 =: Vorratsbehälter
- 24 =: Druckspeicher
- 25 =: Steuerventil
- 26 =: Stellzylinder
- 27 =: Steuereinrichtung
- 28 =: Rechnereinheit
- 29 =: Sensorelement zur Bestimmung der Temperatur
- 30 =: Signalleitung
- 31 =: Sensorelement zur Bestimmung der Einschaltdauer des elektrischen Antriebs
- 32 =: Signalleitung
- 33 =: Signalleitung
- 34 =: Rückschlagventil
- 35 =: Druckbegrenzungsventil
- 36 =: Rückführleitung
- 37 =: Speichereinrichtung

## Patentansprüche

1. Verfahren zum Schutz eines Stellantriebs zum Stellen einer Vorrichtung, vorzugsweise einer Kupplung und/oder eines Getriebes oder zumindest einzelner Komponenten davon, vor Überlastung in Folge vorangegangener Schäden oder durch Mißbrauch, **gekennzeichnet durch** folgende Schritte:
a) betriebsspezifische Werte des Stellantriebs oder einzelner Komponenten des Stellantriebs werden ermittelt oder erfaßt und an eine Rechnereinheit weitergeleitet;
b) in der Rechnereinheit werden über einen definierten Zeitraum ermittelte oder erfaßte betriebsspezifische Werte überwacht und/oder verarbeitet;
c) wenn die betriebsspezifischen Werte innerhalb des definierten Zeitraums einen vorgegebenen Grenzwert erreichen oder übersteigen, werden über die Rechnereinheit Maßnahmen zum Schutz des Stellantriebs oder der einzelnen Komponenten vor Überlastung eingeleitet.

2. Verfahren nach Anspruch 1, **dadurch gekennzeichnet, daß** die ermittelten oder erfaßten betriebsspezifischen Werte des Stellantriebs innerhalb der Rechnereinheit mit wenigstens einem entsprechenden Referenzwert, der den Grenzwert bildet, verglichen werden.

3. Verfahren nach Anspruch 1 oder 2, **dadurch gekennzeichnet, daß** über die Rechnereinheit Maßnahmen zum Schutz des Stellantriebs oder einzelner Komponenten des Stellantriebs vor Überlastung eingeleitet werden, wenn die betriebsspezifischen Werte den vorgegebenen Grenzwert für eine bestimmte Zeitdauer innerhalb des definierten Zeitraums erreichen oder übersteigen.

4. Verfahren nach einem der Ansprüche 1 bis 3, **dadurch gekennzeichnet, daß** die betriebsspezifischen Werte und/oder die Grenzwerte zumindest zeitweilig in einer Speichereinrichtung abgelegt werden oder sind und daß die Rechnereinheit Zugriff auf die Speichereinrichtung nimmt oder nehmen kann.

5. Verfahren nach einem der Ansprüche 1 bis 4, **dadurch gekennzeichnet, daß** die betriebsspezifischen Werte über Programmittel in der Rechnereinheit überwacht und/oder verarbeitet werden.

6. Verfahren nach einem der Ansprüche 1 bis 5, **dadurch gekennzeichnet, daß** der definierte Zeitraum eine Minute beträgt.

7. Verfahren nach einem der Ansprüche 1 bis 6, **dadurch gekennzeichnet, daß** als betriebsspezifischer Wert die Einschaltdauer eines dem Stellantrieb zugeordneten elektrischen Antriebs ermittelt wird, daß in der Rechnereinheit die Einschaltdauer des elektrischen Antriebs aus dem Verhältnis der durchschnittlichen Einschaltzeit zur Ruhezeit des elektrischen Antriebs über den definierten Zeitraum berechnet wird und daß bei Erreichen eines Grenzwerts für die Einschaltdauer Maßnahmen zum Schutz des elektrischen Antriebs vor Überlastung eingeleitet werden.

8. Verfahren nach einem der Ansprüche 1 bis 7, **dadurch gekennzeichnet, daß** die Temperatur des Stellantriebs oder einzelner Komponenten des Stellantriebs gemessen wird und daß die gemessenen Temperaturwerte an die Rechnereinheit weitergeleitet werden.

9. Verfahren nach Anspruch 8, **dadurch gekennzeichnet, daß** die gemessenen Temperaturwerte in der Rechnereinheit mit einer Temperaturkennlinie verglichen werden und daß der vorgegebene Grenzwert einen diskreten Punkt auf der Kennlinie oder einen Bereich der Kennlinie darstellt.

10. Verfahren nach Anspruch 8 oder 9, soweit auf Anspruch 5 rückbezogen, **dadurch gekennzeichnet, daß** in der Rechnereinheit aus der Einschaltdauer im Verhältnis zur Temperatur die Temperatur des elektrischen Antriebs berechnet wird.

11. Verfahren nach einem der Ansprüche 7 bis 10, **dadurch gekennzeichnet, daß** als Maßnahme zum Schutz des elektrischen Antriebs eine Reduzierung der Einschaltdauer des elektrischen Antriebs und/oder der Temperatur des Stellantriebs oder einzelner Komponenten des Stellantriebs vorgenommen wird.

12. Verfahren nach einem der Ansprüche 7 bis 11, **dadurch gekennzeichnet, daß** als Maßnahme zum Schutz des elektrischen Antriebs die Einschaltdauer auf einen Maximalwert begrenzt wird.

13. Verfahren nach einem der Ansprüche 7 bis 13, **dadurch gekennzeichnet, daß** als Maßnahme zum Schutz des elektrischen Antriebs eine konstante Einschaltdauer geschaltet wird.

14. Verfahren nach einem der Ansprüche 1 bis 14, **dadurch gekennzeichnet, daß** als betriebsspezifischer Wert die durchschnittliche Anzahl der Stellvorgänge der Vorrichtung durch den Stellantrieb über den definierten Zeitraum erfaßt und an die Rechnereinheit weitergeleitet wird.

15. Verfahren nach einem der Ansprüche 1 bis 14, **dadurch gekennzeichnet, daß** der Stellantrieb als hydraulischer Stellantrieb ausgebildet ist, daß der Stellantrieb eine Pumpe aufweist und daß als betriebsspezifischer Wert die durchschnittliche Einschalthäufigkeit der Pumpe über den definierten Zeitraume erfaßt und an die Rechnereinheit weitergeleitet wird.

16. Verfahren nach einem der Ansprüche 1 bis 15, **dadurch gekennzeichnet, daß** der Stellantrieb als hydraulischer Stellantrieb ausgebildet ist und daß als betriebsspezifischer Wert der Druckanstieg innerhalb des Stellantriebs oder einzelner Komponenten des Stellantriebs erfaßt und an die Rechnereinheit weitergeleitet wird.

17. Verfahren nach einem der Ansprüche 1 bis 16, **dadurch gekennzeichnet, daß** der Stellantrieb als hydraulischer Stellantrieb ausgebildet ist, daß als betriebsspezifischer Wert der herrschende Druck innerhalb des Stellantriebs oder einzelner Komponenten des Stellantriebs erfaßt und an die Rechnereinheit weitergeleitet wird und daß über die Rechnereinheit Maßnahmen zum Schutz des Stellantriebs oder der einzelnen Komponenten vor Überlastung eingeleitet werden, wenn die erfaßten Druckwerte eine bestimmte Druckschwelle unterschreiten.

18. Verfahren nach Anspruch 17, **dadurch gekennzeichnet, daß** als Maßnahme zum Schutz des hydraulischen Stellantriebs vor Überlastung ein Stellvorgang des hydraulischen Stellantriebs verhindert oder verzögert wird.

19. Steuereinrichtung zum Schutz eines Stellantriebs (20) zum Stellen einer Vorrichtung (10), vorzugsweise einer Kupplung und/oder eines Getriebes oder zumindest einzelner Komponenten davon, vor Überlastung, mit einem oder mehreren Sensorelementen (29, 31) zum Ermitteln oder Erfassen betriebsspezifischer Werte des Stellantriebs (10) oder einzelner Komponenten des Stellantriebs (10), und mit einer Rechnereinheit (28) zum Überwachen und/oder Verarbeiten der ermittelten oder erfaßten betriebsspezifischen Werte, wobei die Rechnereinheit (28) Programmittel zur Durchführung des Verfahrens nach einem der Ansprüche 1 bis 18 aufweist.

20. Speichereinrichtung für Steuerprogramme, **gekennzeichnet durch** Programmittel zur Durchführung des Verfahrens nach einem der Ansprüche 1 bis 18.

21. Hydraulischer Stellantrieb für eine Vorrichtung (10), vorzugsweise eine Kupplung und/oder ein Getriebe mit einer Steuereinrichtung (27), die eine Rechnereinheit (28) aufweist oder mit einer Rechnereinheit (28) verbunden ist, und einer mittels eines Antriebs (22) antreibbaren Pumpe (21), **gekennzeichnet durch** Mittel zur Durchführung des Verfahrens nach einem der Ansprüche 1 bis 18.

22. Hydraulischer Stellantrieb nach Anspruch 21, **dadurch gekennzeichnet, daß** die Steuereinrichtung (27) gemäß Patentanspruch 19 ausgebildet ist.

23. Hydraulischer Stellantrieb nach Anspruch 21 oder 22, **dadurch gekennzeichnet, daß** eine Speichereinrichtung (37) und/oder Anzeigeeinrichtung vorgesehen ist, die mit der Steuereinrichtung (27), insbesondere der Rechnereinheit (28), verbunden ist.

24. Hydraulischer Stellantrieb nach einem der Ansprüche 21 bis 23, **dadurch gekennzeichnet, daß** der Antrieb der Pumpe (21) als elektrischer Motor ausgebildet ist.
